# EUROPÄISCHE PATENTSCHRIFT

(11) **EP 3 257 821 B1**
(45) Veröffentlichungstag und Bekanntmachung des Hinweises auf die Patenterteilung: **13.05.2020**
(21) Anmeldenummer: 17175440.1
(22) Anmeldetag: 12.06.2017
(51) Int. Cl.: C02F 9/00, E04G 23/00, C02F 1/28, B08B 3/02, B08B 3/14

(54) **MOBILE VORRICHTUNG ZUR REINIGUNG VON ABWASSER AUS EINER FASSADENREINIGUNG**
MOBILE DEVICE FOR PURIFICATION OF WASTE WATER FROM FACADE CLEANING
DISPOSITIF MOBILE D'ÉPURATION D'EAUX USÉES PROVENANT DU NETTOYAGE DE FAÇADES

(30) Priorität: 13.06.2016 DE 202016103108 U; 02.03.2017 DE 102017104429
(43) Veröffentlichungstag der Anmeldung: 20.12.2017
(73) Patentinhaber: Fuchs, Peter, 53819 Neunkirchen-Seelscheid (DE)
(72) Erfinder: Fuchs, Peter, 53819 Neunkirchen-Seelscheid (DE)
(74) Vertreter: Simandi, Claus

(56) Entgegenhaltungen:
- EP-A1- 2 009 201
- WO-A1-2012/136220
- DE-A1- 19 905 535
- NL-A- 9 400 673

## Beschreibung

Die Erfindung betrifft eine Vorrichtung und ein Verfahren zum Reinigen von Abwässern, die beim Aufbereiten von Gebäudefassaden anfallen. Solche Aufbereitungsarbeiten sind beispielsweise das Sandstrahlen oder das Waschen oder das Hochdruckreinigen, wobei typischerweise mindestens ein Arbeitsschritt enthalten ist, bei dem Wasser oder eine wässrige Lösung zum Einsatz kommt.

Im dabei entstehenden Abwasser befinden sich üblicherweise Reste von Farbanstrichen, Festpartikel, organische und anorganische Verschmutzungen sowie wasserlösliche Schmutzstoffe und ggf. verwendete Reinigungszusätze. Viele der früher verwendeten und nunmehr entfernten Farben enthalten noch Schwermetalle und andere Giftstoffe, die Schimmelbildung verhindern sollten.

Leider werden in vielen Fällen solche anfallenden Abwässer ungereinigt in die Kanalisation abgelassen oder man lässt sie im Umfeld der Gebäude versickern, was beides umweltschädigend ist. Eine der Schwierigkeiten im Umgang mit diesen Abwässern ist dabei der Umstand, dass sie schwer aufzufangen und abzuleiten sind, während an den Gebäudefassaden gearbeitet wird.

Sofern das Gebäude eingerüstet ist, stört das Gerüst die Aufstellung von Abwasser-Auffangvorrichtungen und Abwasser-Ableitungen, die beide häufig umgesetzt werden müssen, was wegen der Gerüstkonstruktion jeweils sehr zeitaufwendig ist. Sofern das Gebäude nicht eingerüstet ist, ist es wegen der Gewichte und der Hebelwirkungen schwierig, die Abwasser-Auffangvorrichtungen parallel zu den Mitteln zu führen, mit denen die Reinigung durchgeführt wird.

Das Problem der Reinigung von Abwässern, welche Farbreste und Partikel enthalten, ist seit langem bekannt. Es tritt auch auf, wenn die Arbeitsgeräte der beschäftigten Fachleute gereinigt werden müssen. Hierfür sind technische Lösungen bekannt geworden. Die beiden Gebrauchsmuster DE 91 07 440 U1 und DE 93 01 281 U1 beschreiben jeweils voluminöse Vorrichtungen, die der Reinigung von Malerpinseln und Malerwalzen dienen.

Bei der DE 91 07 440 U1 werden die Malergeräte unter laufendem Wasser gewaschen und das ablaufende Wasser wird in einem konischen Behälter gesammelt. Hiernach findet mithilfe von geeigneten Chemikalien eine Fällung statt und die Phasen werden in einen darunter angeordneten konischen Sedimentationsbehälter geleitet. Nach der Sedimentation können ein Farbschlamm in einen Sammelbehälter und eine Klarlösung in die Kanalisation abgeführt werden. Die DE 93 01 281 U1 verbessert diese Vorrichtung durch eine Hochdruck- und/oder Dampfstrahlreinigungseinrichtung im oberen Waschbecken. Als Hochdruckeinrichtung könne ein Hochdruckreiniger, wie er zur Fassadenreinigung verwendet wird, eingesetzt werden.

Es wurden auch Systeme bekannt, die Waschwasser von Fassadenreinigungen filtern können. Beispielsweise beschreibt die WO 89/08082 A1 eine Vorrichtung, bei der anfallendes Schmutzwasser in einer Wanne aufgefangen wird, daraufhin in einem ersten Behälter von mechanischen Schmutzpartikeln befreit, anschließend in einem zweiten Behälter durch gesteuerte Zusätze einer Base oder einer Säure neutralisiert und danach in einen dritten Behälter gesammelt und aus diesem in die Kanalisation abgelassen oder für eine Wiederverwendung entnommen wird. Der erste, zweite und dritte Behälter sind zusammen in einem Transportbehälter untergebracht, der auch noch Säure- und Basenbehälter, pH-Messgerät Dosierpumpen, elektronische Steuer- und Anzeigemittel, und in einer Ausführungsvariante auch noch Sammelbehälter und Förderpumpen für Spalt- bzw. Entflockungsmittel oder auch Ölabscheider oder auch Aktivkohlefilter enthalten kann.

Nachteilig ist bei dieser technischen Lösung der notwendige Umgang mit Chemikalien, das Gewicht der Vorrichtung und die Förderung des Schmutzwassers zum Transportbehälter, was einen mobilen Einsatz stark einschränkt. Ein unmittelbarer Einsatz neben der Person, die den Waschvorgang an der Fassade durchführt, ist so nicht sinnvoll möglich.

Ein weiteres System zur Fassadenreinigung wird in der EP 2 008 973 A1 beschrieben. Hierbei wird das Abwasser in einem Gulli in der Nähe der Fassadenwand aufgefangen und von dort in eine dreistufige Abwasserreinigung gegeben. Die drei aufeinander folgenden Stufen sind Partikelabscheidung, Abscheidung organischer Stoffe und Schwermetallabscheidung, letzteres vorzugsweise mittels eines lonentauschers. Nachteilig ist hierbei, dass das System nicht mobil ist.

Ein weiteres System zur Fassadenreinigung wird in der DE 100 04 343 A1 beschrieben. Hierbei kommt ein Hochdruckreinigungsgerät mit einer Reinigungshaube zum Einsatz. Das Abwasser wird von der Reinigungshaube aufgefangen und in einen zylindrischen Vorabscheider geführt, der mit einem nassfesten Faltenfilter ausgestattet ist. Das System ist mobil und auch geeignet zur Abscheidung von Asbestfasern, kann aber keine weitergehende Wasserreinigung bewirken.

Weitere Systeme zur Fassadenreinigung werden in DE19905535 A1 und NL9400673 A beschrieben.

Die Aufgabe der Erfindung ist daher, ein leistungsfähiges System bereitzustellen, welches während des Fassaden-Reinigungsvorgangs am Ort der Reinigung durch das befasste Personal mitgeführt werden kann und das Abwasser so gut reinigt, dass es bedenkenlos entsorgt werden kann.

Die Erfindung löst die Aufgabe gemäß Anspruch 1 durch eine Filtervorrichtung zur Reinigung von Abwasser aus einer Fassadenreinigung mit
- einem oben oder seitlich offenen Filterbehälter, aufweisend
- einen Zulauf für Schmutzwasser,
- einen Ablauf für Klarwasser,
- eine Förderpumpe mit einem elektrischen Anschluss,
- mindestens zwei Kammern,
- und drei weiteren Kartuschen,
wobei
- der Zulauf oberseitig in eine erste Kammer geführt wird, die unterseitig eine Abscheideeinrichtung für grobe Schmutzpartikel aufweist,
- unterhalb der ersten Kammer ein Ablauf in eine zweite Kammer angeordnet ist,
- mit dieser zweiten Kammer eine schwimmergesteuerte Tauchpumpe in einem Topf hydraulisch verbunden ist,
- Die Tauchpumpe mit einer ersten von mindestens drei druckfesten, verschlossenen Kartuschen verbunden ist, welche seriell miteinander hydraulisch verbunden sind und die letzte davon mit dem Ablauf für Klarwasser verbunden ist,
- die erste Kartusche einen Sedimentfilter für Partikel größer als 5 µm enthält,
- die zweite Kartusche einen Sedimentfilter für Partikel größer als 1 µm enthält, und
- die dritte Kartusche einen Kohle- oder Aktivkohlefilter enthält.

In einer Ausgestaltung der Erfindung ist vorgesehen, dass die mindestens drei Kartuschen in einer dritten Kammer angeordnet sind. Die Kartuschen sind dabei als druckdichte Behälter ausgeführt, die man öffnen kann, um Einsätze, die als Patronen ausgeführt sind, wechseln zu können. Während des Öffnens werden Zu- und Ablauf der Kartuschenbehälter versperrt, so dass kein Wasser nachlaufen oder ablaufen kann.

In einer weiteren Ausgestaltung der Erfindung ist vorgesehen, dass zumindest eine der Kartuschen redundant ausgeführt ist, wobei jeweils eine der redundant ausgeführten Kartuschen im Stand-By geschaltet ist, und die zueinander redundant ausgeführten Kartuschen über eine Umschaltvorrichtung verfügen, die eine Umschaltung sowie einen Austausch verbrauchter Kartuschen durch frische Kartuschen im laufenden Betrieb ermöglichen. Vorzugsweise sind alle drei Kartuschen redundant ausgeführt.

In einer weiteren Ausgestaltung der Erfindung weist die erste oder die zweite Kartusche einen Sedimentfilter in der Bauform einer Wickelkerze auf. Auch können beide Kartuschen Sedimentfilter in Wickelkerzen-Bauform aufweisen.

In einer weiteren Ausgestaltung der Erfindung ist vorgesehen, dass die erste Kammer unterseitig durch ein Vlies abgeschlossen wird, welches auf einem Gitter aufliegt, ferner einen Strömungsbrecher im Einlaufbereich aufweist, welcher so ausgeführt ist, dass die einlaufende Flüssigkeit möglichst gleichmäßig über die Oberfläche des Vlieses verteilt wird. Das Vlies dient dabei als Vorabscheider für grobe Verunreinigungen. Die erste Kammer steht dabei nicht unter Druck und ist nicht luftdicht abgeschlossen.
In weiteren Ausgestaltungen der Erfindung ist vorgesehen, dass die zweite Kammer unterhalb der ersten Kammer angeordnet und mit einer Sedimentierwanne ausgestattet ist. Sand, der sich in der Sedimentierwanne ansammelt, kann daraus leicht manuell entfernt werden. Die zweite Kammer dient auch als Zwischenspeicher für Abwasser, um den nachfolgenden Volumenstrom durch die Kartuschen auch bei wechselnden Zustrommengen gleichmäßig halten zu können. Alternativ kann die zweite Kammer auch mit einem Hydrozyklon ausgestattet sein, der durch das Gefälle angetrieben wird.

In einer weiteren Ausgestaltung der Erfindung ist der Einlauf der ersten Kammer mit einer Reinigungshaube hydraulisch verbunden, die mit einem Hochdruckreinigungsgerät verbunden ist. Die Reinigungshaube kann dabei der Ausführung wie in der DE 100 04 343 A1 entsprechen.

In einer weiteren Ausgestaltung der Erfindung bilden das Hochdruckreinigungsgerät und die Filtervorichtung eine kompakte bauliche Einheit.

In einer weiteren Ausgestaltung der Erfindung wird ein Teil des Klarwassers aus dem Ablauf als Vorlage für die Zuführung von Flüssigkeit zum verwendeten Hochdruckreiniger eingesetzt und somit rezykliert. Hierzu wird eine Leitung hinter dem Ablauf des Klarwassers abgezweigt und mit der Vorlage für die Zuführung von Flüssigkeit für das Hochdruckreinigungsgerät verbunden. Hierdurch kann der Einsatz von Frischwasser und der gesamte Abwasseranfall deutlich verringert werden.

Die Erfindung umfasst auch ein entsprechendes Verfahren zur Reinigung von Abwasser aus einer Fassadenreinigung, wobei das Abwasser
- in eine erste Kammer geleitet wird, in der mittels eines mechanischen Vorfilters grobe feste Teile aufgefangen werden,
- danach in eine zweite Kammer geleitet wird, in der durch Schwerkraft- oder Zentrifugalkraftwirkung Partikel mit höherer Wichte als Wasser abgeschieden werden,
- danach in einen Sumpf mit einer Tauchpumpe geleitet wird,
- von der Tauchpumpe in eine erste Kartusche geleitet wird, in der mitgeführte Partikel größer 5 µm abfiltriert werden,
- danach in eine zweite Kartusche geleitet wird, in der Partikel größer 1 µm abfiltriert werden,
- und danach in eine dritte Kartusche geleitet wird, welche ein Bett aus Kohle-haltigem oder Aktivkohle-haltigem Absorbensmaterial enthält.

Wie oben bereits ausgeführt, ist hierbei vorgesehen, dass das Abwasser mittels einer Reinigungshaube von der Fassade aufgefangen und in die erste Kammer geleitet wird und wenigstens ein Teil des aus der dritten Kartusche abgezogenen Klarwassers als Reinigungswasser in die Reinigungsvorrichtung rezykliert wird.

Weitere Ausgestaltungen der Erfindung betreffen die Mess- und Regelungsvorgänge. Hierbei wird vorgesehen, dass hinter dem Auslass der dritten Kartusche kontinuierlich Druck und Durchflussmenge gemessen werden. Weiterhin werden über die drei Kartuschen jeweils die Druckdifferenzen gemessen, was entweder über Differenzdruckmessgeräte geschieht oder über einzelne Druckmessungen, die in einer Recheneinheit zu Druckdifferenzen berechnet werden. Entsprechend der gemessenen Durchflussmenge, der Differenzdrucke und der Kennlinien der Kartuschen kann damit der Füllstand der Kartuschen ermittelt und angezeigt werden.

Hierbei ist vorgesehen, dass das Füllstandssignal in Form einer weithin sichtbaren Ampelanzeige ausgegeben wird, wobei "Grün" für "Leer", "Gelb" für "Bitte Wechseln" und "Rot" für "Voll" steht. Alternativ kann das Signal auch elektronisch bzw. durch Funk an ein Mobilgerät gesendet werden.

Eine weitere Ausgestaltung der Erfindung betrifft die Verwendung von jeweils redundant geschalteten Kartuschen. Hierbei werden jeweils zwei gleiche Kartuschen parallel geschaltet, wobei beide Zuleitungen mit Absperrventilen versehen sind, die durch Signale geöffnet oder geschlossen werden können und wobei die Stellung vor Ort sichtbar ist. Sofern für eine Kartusche das Signal für "Voll" , entsprechend der Farbe "Rot", erscheint, schließt das zugehörige Ventil den Zustrom ab und gleichzeitig öffnet das zuvor verschlossene andere Ventil der parallelen Kartusche. Sollte diese auch "Voll" melden, etwa, weil es versäumt wurde, die Kartusche rechtzeitig mit einer unverbrauchten Patrone zu versehen, wird die Tauchpumpe abgeschaltet. Ansonsten ist es auf diese Weise möglich, dass ein durchgehender Betrieb der Fassadenreinigung möglich ist, während eine weitere Serviceperson die Patronen der Kartuschen wechselt. Auch ist es so möglich, eine automatische Reservebestellung zu veranlassen, ohne die Arbeit unterbrechen zu müssen. Selbstverständlich kann man die Ventile statt in den Zuleitungen der Kartuschen auch in deren Abläufen anordnen.

Eine weitere Ausgestaltung der Erfindung betrifft die Dokumentation des Reinigungsergebnisses. Hierzu wird vorgesehen, dass der gemessene Mengenstrom aufgezeichnet und in regelmäßigen Abständen automatisch Proben genommen und analysiert werden. Die Analyse auf Schwermetallreste und biologisch bedenkliche Stoffe kann dabei mit zertifizierten Methoden, etwa spektrometrisch, erfolgen. Sollte hierbei ein deutlicher Anstieg zu verzeichnen sein, wird ein Signal analog zum Druckverlust auf das Füllstandssignal der dritten Kartusche geleitet und analog zu einem Druckverlustanstieg verfahren, um einen Patronenwechsel zu veranlassen.

Die Erfindung wird nachfolgend an 4 Beispielen näher erläutert.
Fig. 1 zeigt schematisch eine quaderförmige Bauform,
Fig. 2 zeigt eine zylindrische Bauform,
Fig. 3 zeigt eine zylindrische Bauform mit integriertem Hochdruckreiniger,
Fig. 4 zeigt eine Verfahrensschaltung mit redundanten Kartuschen sowie Mess- und Regelungstechnik.
Fig. 5 zeigt eine weitere Bauform mit Füllstandsanzeigen.

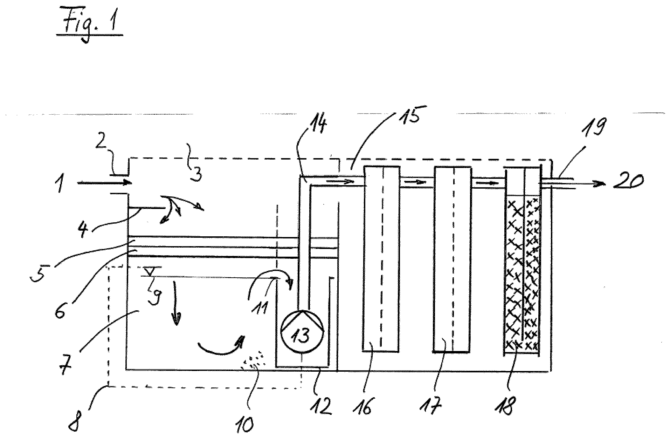

Fig. 1 zeigt eine Prinzipskizze eines Filterbehälters, in welchen das Abwasser 1 durch den Wassereinlauf 2 in die erste Kammer 3 eingeleitet wird. Hierbei trifft es zunächst auf einen Strömungsbrecher 4, der als Verteiler ausgeführt ist und die Aufgabe hat, den Wasserstrahl aufzufächern. Das Abwasser tritt durch die Vliesschicht 5, welche von dem Gitter 6 gehalten wird, hindurch, wobei grobe Partikel abgehalten werden, und von Zeit zu Zeit von der Vliesoberfläche abgesammelt werden können. Die Vliesschicht 5 ist dabei lose abnehmbar und kann, falls notwendig, von Zeit zu Zeit gereinigt oder auch günstig ersetzt werden. Auch das Gitter 6 ist lose aufgelegt und kann manuell abgenommen werden. Sofern im Abwasser 1 auch Luft mitgeführt wird, kann diese ungehindert nach oben entweichen.

Unterhalb des Gitters 6 ist die zweite Kammer 7 angeordnet, die im laufenden Betrieb stets einen Wasservorrat aufweist, der bei Erreichen einer entsprechenden Wasserhöhe ein Signal 8 durch einen Signalgeber 9 erzeugt. Durch die Anwesenheit eines Wasservorrats und die verteilte Wasserzugabe durch das Vlies ergibt sich ein Sedimentationseffekt, der zur Ablagerung von Sandpartikeln 10 am Boden der zweiten Kammer 7 führt. Diese abgelagerten Sandpartikel 10 müssen von Zeit zu Zeit manuell entfernt werden.

Der Flüssigkeitspegel in der zweiten Kammer 7 ist durch die Höhe des Überlaufwehres 11 des Pumpentopfes 12 limitiert, sobald dieser Flüssigkeitspegel der zweiten Kammer überschritten wird, wird die Tauchpumpe 13 automatisch eingeschaltet. Sie führt das zu reinigende und von groben Teilen befreite Abwasser über die Druckleitung 14 in die dritte Kammer 15, welche üblicherweise trocken bleibt.

In der dritten Kammer 15 sind nacheinander die drei Kartuschen 16, 17 und 18 angeordnet, die dritte Kammer selbst ist nicht mit Wasser gefüllt, sondern dient dem Schutz der Kartuschen und der Mess- und Regelungstechnik im rauen Außenbetrieb. Hierbei weist die Kartusche 16 eine Filtermembran auf, die Partikel größer 5 µm zurückhält und den größten Teil der kleineren Schwebstoffe durchlässt. Direkt mit dem Ablauf dieser Kartusche 16 ist der Einlauf mit der Kartusche 17 verbunden, welche eine Filtermembran aufweist, die Partikel größer 1 µm zurückhält und den größten Teil der kleineren Schwebstoffe durchlässt. Direkt mit dem Ablauf dieser Kartusche 17 ist der Einlauf mit der Kartusche 18 verbunden, welche eine Schüttung oder eine Packung mit Kohle oder Aktivkohle enthält. Hieran werden die Schwermetalle, die nicht an Partikel gebunden sind, zurückgehalten.

Die drei Kartuschen 16, 17 und 18 sind fest mit Rohrleitungen verbunden, können aber durch geeignete Verschlüsse geöffnet werden, wobei die Membranen gereinigt oder ausgetauscht werden können, wenn sie beladen sind. Dieser Austausch kann vor Ort schnell erfolgen. Einsetzbar sind hierfür beispielsweise handelsübliche Kartuschen der Marke "BigBlue Primo 20" bzw. "Big Blue Solid 20" von Pentair™.

Üblicherweise kann mit einem Satz derartiger Kartuschen eine Fassadenfläche von ca. 200 m² gereinigt werden. In Sonderfällen können auch mehr als 3 solcher Kartuschen in Serie geschaltet werden, was ebenfalls Gegenstand der Erfindung ist, wobei die Membranweiten entsprechend anzupassen sind.

Die Kartusche 18 ist direkt mit dem Ablauf 19 verbunden, das gereinigte Wasser 20 verlässt den Filterbehälter mit leichtem Überdruck. Nicht in Fig. 1 gezeigt sind Rollen und Griffe, mit denen das Gerät bewegt werden kann, wegen der kompakten Bauweise kann es sowohl auf Gerüsten als auch im Gelände genauso bewegt werden wie ein handelsüblicher Hochdruckreiniger, es eignet sich daher auch als Zubehörteil.

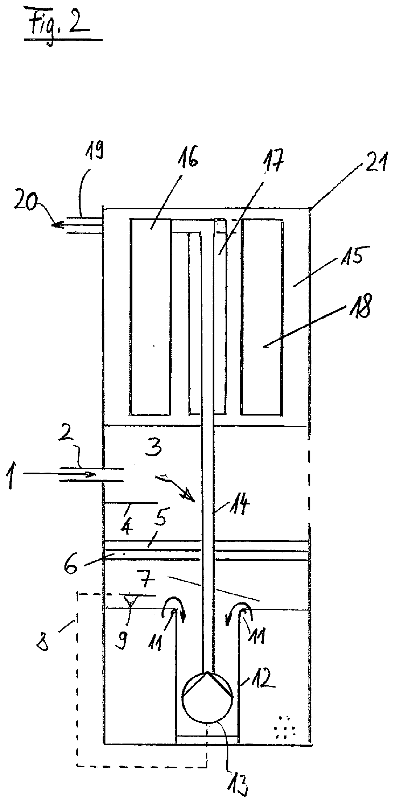

Fig. 2 zeigt eine alternative Ausführungsform, wobei jedoch der grundsätzliche Aufbau dem der Fig. 1 entspricht. Der zylindrische Behälter 21 weist im mittleren Teil den Abwasserzulauf 2 mit der ersten Kammer 1 auf, darunter ist die zweite Kammer 7 mit der Tauchpumpe 13 angeordnet. Diese führt das vorgereinigte Wasser in die oben angeordnete dritte Kammer 15 mit den drei Kartuschen 16, 17 und 18, die als gleichseitiges Dreieck angeordnet sind. Die Verrohrung dieser drei Kartuschen ist in Fig. 2 lediglich angedeutet. Der Vorteil dieser Anordnung besteht darin, dass der Gesamtschwerpunkt tief liegt, während sich die Kartuschen in Arbeithöhe befinden, was deren schnellen Wechsel begünstigt. Das gesamte Teil hat dabei die Dimensionen eines handelsüblichen Hochdruckreinigers bzw. Nasssaugers, wobei zur Reduzierung von Bauvolumen kleinere Kartuschen mit einer geringeren Reichweite zum Einsatz kommen. Eine solche Kompaktbauweise eignet sich z.B. zur Reinigung von Wänden bei Dachterrassen, für die die Ausrüstungen durch ein Treppenhaus transportiert werden müssen, bei denen die Fassadenfächen aber nicht allzu groß sind.

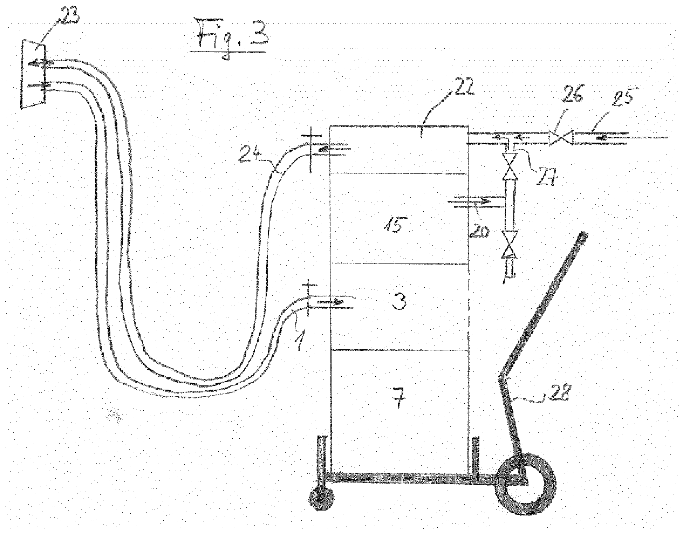

Fig. 3 zeigt eine weitere alternative Ausführungsform, bei der ein typischer Hochdruckreiniger 22 und eine handelsübliche Reinigungshaube 23 sowie die Reinigungswasserversorgung 24 integriert sind. Hierbei besitzt der Hochdruckreiniger 22 einen Frischwasserzulauf 25, der über ein Rückschlag- und Druckminderungsventil 26 gegen rückströmendes Wasser gesichert ist, sowie einen Anschluss 27 an den Klarwasserablauf 20 und übliche sonstige Armaturen und Schlauchverbindungen. Hierdurch wird eine sehr Wasser sparende und Abwasser-arme Betriebsweise ermöglicht, ohne dass sich Größe und Gewicht im Vergleich zu handelsüblichen Geräten, wie sie beispielsweise von Fa. Storch unter der Handelsbezeichnung "Hochdruck-Krake 80" erhältlich sind, nennenswert erhöhen.

Die kompakte Bauweise ermöglicht die Mitnahme an jeden Einsatzort ohne das Risiko von Verschmutzungen oder dem Versickern von giftigen Abwässern. Beispielhaft ist hier eine Transportvorrichtung 28 skizziert. Erforderlich sind lediglich eine kleinlumige Wasserzuleitung und eine ebensolche Wasserableitung mit entsprechenden Armaturen, wie sie im Gartenbedarf üblich sind.

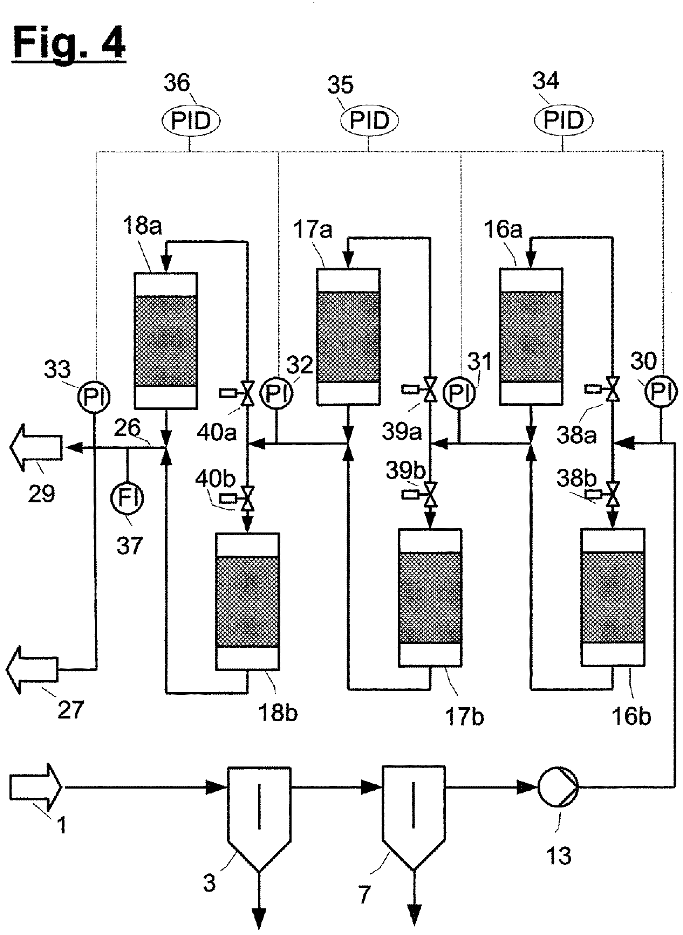

Fig. 4 zeigt das erfindungsgemäße Verfahren in einer Ausführung mit redundanten Kartuschen. Hierbei wird das eintreffende Abwasser 1 durch die beiden als Abscheider wirkenden Kammern 3 und 7 zur Tauchpumpe 13 geleitet, die es in die redundanten Kartuschen 16a/b, 17a/b und 18a/b fördert. Vor dem ersten Abzweig in die erste Kartusche 16a/b wird der Eingangsdruck im Druckmessgerät 30 gemessen, danach wird das Abwasser in die erste Kartusche 16a geleitet. Hierbei ist das Stellventil 38a geöffnet und das Stellventil 38b geschlossen. Danach wird der Ausgangsdruck im Druckmessgerät 31 gemessen und der Differenzdruck im Differenzdruckgerät 34 ermittelt und angezeigt. Der gleiche Vorgang findet danach für die zweite und die dritte Kartusche statt, wobei der im Druckmessgerät 31 ermittelte Ausgangsdruck auch gleich dem Eingangsdruck der zweiten Kartusche ist.

Das Wasser aus der ersten Kartusche 16a/b wird bei geöffnetem Stellventil 39a in die zweite Kartusche 17a geleitet, der Ausgangsdruck im Druckmessgerät 32 gemessen, der Differenzdruck im Differenzdruckgerät 35 ermittelt, das Wasser aus der zweiten Kartusche 17a/b wird bei geöffnetem Stellventil 40a in die dritte Kartusche 18a geleitet, der Ausgangsdruck im Druckmessgerät 33 gemessen und der Differenzdruck im Differenzdruckgerät 36 ermittelt. Das Klarwasser 26, das die dritte Kartusche verlässt, wird beprobt, teilweise rezykliert und im Übrigen ins Abwasser 29 geleitet.

Durch die Bauweise mit Kartuschen wird erreicht, dass ein Umgang mit losen Chemikalien vermieden werden kann, was ein Vorteil der Erfindung ist.

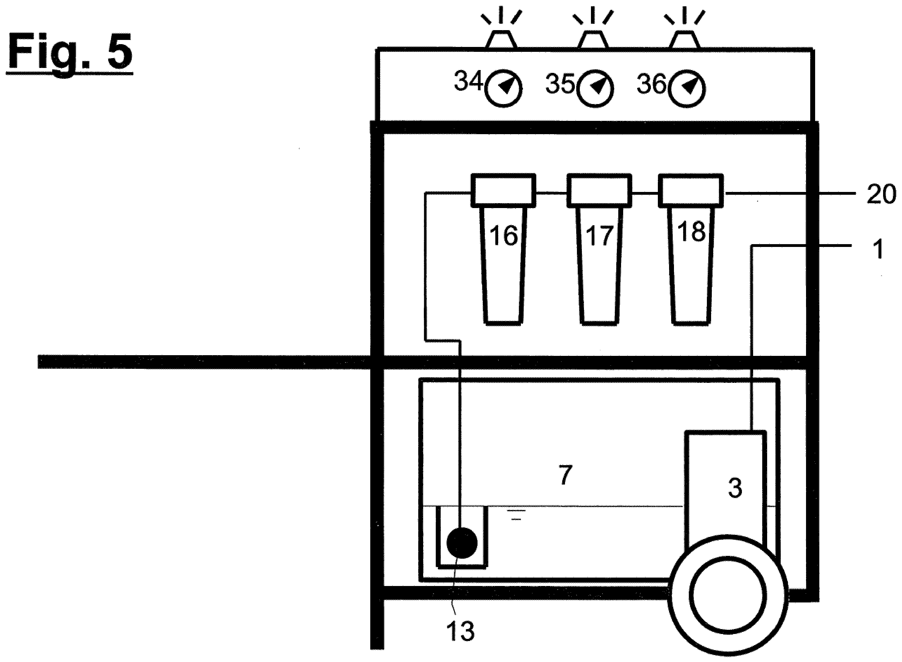

Fig. 5 zeigt eine weitere Bauform. Die erste Kammer 3 ist hier als Vorfilter ausgeführt, der mit einem nassfesten Filterbeutel groben Schmutz zurückhält. Daraus läuft das Wasser in die zweite Kammer, eine 200-Liter-Wanne und wird danach von der Tauchpumpe 13 durch die drei Kartuschen 16, 17 und 18 gedrückt. Die drei Kartuschen sind an ihren Köpfen fest montiert, die Patronen weisen Schnellverschlüsse auf und sind, nach Absperrung, einzeln nach vorne herausnehmbar und wiedereinsatzbar. Im Betrieb sind im unteren Teil, d.h. unterhalb der Schubkarrengriffe, sowie oberhalb Einhausungen vorgesehen, eine dritte Kammer für die Kartuschen ist nicht erforderlich. Oberhalb der Kartuschen ist eine Haube, in der die Druckanzeigen 34, 35 und 36 eingelassen sind. Diese sind mit farbigen Leuchtanzeigen auf der Haube verbunden. Sofern die Tauchpumpe bei konstantem Druck einen konstanten Flüssigkeitsstrom fördert, kann auf eine Verrechnung der Durchflussmengen mit den gemessenen Druckdifferenzen verzichtet werden und das Signal der Druckdifferenzmessung kann direkt mit den Leuchtanzeigen verbunden werden.

Sofern redundante Kartuschen, wie im Beispiel für Fig. 4 beschrieben, zum Einsatz kommen, kann die in Fig. 5 gezeigte Kartuschenanordnung spiegelbildlich auf der gegenüberliegenden Seite dupliziert werden, die jeweiligen Kartuschen sind dann jeweils von dort aus zugänglich.

In einem Versuch wurden die folgenden Reinigungsleistungen erreicht:

| Parameter | Messwert vor Filtration | Messwert nach Filtration | Einheit | Messverfahren |
|---|---|---|---|---|
| pH-Wert | 8,0 | 8,0 | | DIN EN ISO 10523: 2012-04 (C5) |
| Wassertemperatur | 13,9 | 13,9 | °C | DIN 38404-4: 1976-12 (C 4) |
| Blei, gesamt | 0,082 | <0,050 | mg/l | DIN EN ISO 11885: 2009-09 (E22) |
| Kupfer, gesamt | 0,16 | <0,050 | mg/l | DIN EN ISO 11885: 2009-09 (E22) |
| Zink, gesamt | 1,2 | <0,050 | mg/l | DIN EN ISO 11885: 2009-09 (E22) |

Es wurde jeweils ein Aufschluss durchgeführt. Die Werte für Cadmium, Chrom und Nickel waren in den Proben in gleicher Weise unauffällig.

### Bezugszeichenliste

- 1: Abwasser
- 2: Wassereinlauf
- 3: Erste Kammer
- 4: Strömungsbrecher
- 5: Vliesschicht
- 6: Gitter
- 7: Zweite Kammer
- 8: Signal
- 9: Signalgeber
- 10: Sandpartikel
- 11: Überlaufwehr
- 12: Pumpentopf
- 13: Tauchpumpe
- 14: Druckleitung
- 15: Dritte Kammer
- 16, 16a, 16b: Erste Kartusche
- 17, 17a, 17b: Zweite Kartusche
- 18, 18a, 18b: Dritte Kartusche
- 19: Ablauf
- 20: Klarwasser
- 21: Zylindrischer Behälter
- 22: Hochdruckreiniger
- 23: Reinigungshaube
- 24: Zulauf Reinigunshaube
- 25: Frischwasserzulauf
- 26: Rückschlag- und Druckminderungsventil
- 27: Anschluss / Kreislaufwasser
- 28: Transportvorrichtung
- 29: Abwasser
- 30: Druckmessung vor erster Kartusche
- 31: Druckmessung vor zweiter Kartusche
- 32: Druckmessung vor dritter Kartusche
- 33: Druckmessung nach dritter Kartusche
- 34: Differenzdruckmessung über erster Kartusche
- 35: Differenzdruckmessung über zweiter Kartusche
- 36: Differenzdruckmessung über dritter Kartusche
- 37: Durchflussmessung nach dritter Kartusche
- 38a, 38b: ansteuerbare Stellventile vor erster Kartusche
- 39a, 39b: ansteuerbare Stellventile vor zweiter Kartusche
- 40a, 40b: ansteuerbare Stellventile vor dritter Kartusche

## Patentansprüche

1. Filtervorrichtung zur Reinigung von Abwasser aus einer Fassadenreinigung mit einem oben oder seitlich offenen Filterbehälter, aufweisend
• einen Zulauf (2) für Schmutzwasser (1),
• einen Ablauf (19) für Klarwasser (20),
• eine Tauchpumpe (13) mit einem elektrischen Anschluss,
• mindestens zwei Kammern,
• und drei weiteren Kartuschen,
wobei
• der Zulauf oberseitig in eine erste Kammer (3) geführt wird, die unterseitig eine Abscheideeinrichtung für grobe Schmutzpartikel aufweist,
• unterhalb der ersten Kammer (3) ein Ablauf in eine zweite Kammer (7) angeordnet ist,
• mit dieser zweiten Kammer (7) eine schwimmergesteuerte Tauchpumpe (13) in einem Topf (12) hydraulisch verbunden ist,
• die Tauchpumpe (13) mit einer ersten von mindestens drei druckfesten, verschlossenen Kartuschen verbunden ist, welche seriell miteinander hydraulisch verbunden sind und die letzte davon mit dem Ablauf (19) für Klarwasser (20) verbunden ist,
**dadurch gekennzeichnet, dass**
• die erste Kartusche (16) einen Sedimentfilter für Partikel größer als 5 µm enthält,
• die zweite Kartusche (17) einen Sedimentfilter für Partikel größer als 1 µm enthält, und
• die dritte Kartusche (18) einen Kohle- oder Aktivkohlefilter enthält.

2. Filtervorrichtung nach Anspruch 1, **dadurch gekennzeichnet, dass** die mindestens drei Kartuschen in einer dritten Kammer (15) angeordnet sind.

3. Filtervorrichtung nach Anspruch 1 oder Anspruch 2, **dadurch gekennzeichnet, dass** zumindest eine der Kartuschen redundant ausgeführt ist, wobei jeweils eine der redundant ausgeführten Kartuschen im Stand-By geschaltet ist, und die zueinander redundant ausgeführten Kartuschen über eine Umschaltvorrichtung verfügen, die eine Umschaltung sowie einen Austausch verbrauchter Kartuschen durch frische Kartuschen im laufenden Betrieb ermöglichen.

4. Filtervorrichtung nach einem der vorstehenden Ansprüche, **dadurch gekennzeichnet, dass** die erste und/oder die zweite Kartusche einen Sedimentfilter in der Bauform einer Wickelkerze aufweisen.

5. Filtervorrichtung nach einem der vorstehenden Ansprüche, **dadurch gekennzeichnet, dass** die erste Kammer unterseitig durch ein Vlies (5) abgeschlossen wird, welches auf einem Gitter (6) aufliegt, ferner einen Strömungsbrecher im Einlaufbereich aufweist, welcher so ausgeführt ist, dass die einlaufende Flüssigkeit möglichst gleichmäßig über die Oberfläche des Vlieses (5) verteilt wird.

6. Filtervorrichtung nach einem der vorstehenden Ansprüche, **dadurch gekennzeichnet, dass** die zweite Kammer (7) unterhalb der ersten Kammer (3) angeordnet ist und mit einer Sedimentierwanne ausgestattet ist.

7. Filtervorrichtung nach einem der vorstehenden Ansprüche, **dadurch gekennzeichnet, dass** die zweite Kammer (7) unterhalb der ersten Kammer (3) angeordnet ist und mit einem Hydrozyklon ausgestattet ist.

8. Filtervorrichtung nach einem der vorstehenden Ansprüche, **dadurch gekennzeichnet, dass** der Einlauf der ersten Kammer (3) außenseitig mit einer Reinigungshaube hydraulisch verbunden ist, die mit einem Hochdruckreinigungsgerät (22) verbunden ist.

9. Filtervorrichtung nach einem der vorstehenden Ansprüche, **dadurch gekennzeichnet, dass** eine Leitung (27) hinter dem Ablauf des Klarwassers (20) abgezweigt und mit der Vorlage für die Zuführung von Flüssigkeit (25) für das Hochdruckreinigungsgerät (22) verbunden wird.

10. Verfahren zur Reinigung von Abwasser (1) aus einer Fassadenreinigung, wobei das Abwasser (1)
• in eine erste Kammer (3) geleitet wird, in der mittels eines mechanischen Vorfilters grobe feste Teile aufgefangen werden,
• danach in eine zweite Kammer (7) geleitet wird, in der durch Schwerkraft- oder Zetrifugalkraftwirkung Partikel mit höherer Wichte als Wasser abgeschieden werden,
• danach in einen Sumpf (12) mit einer Tauchpumpe (13) geleitet wird,
• von der Tauchpumpe (13) in eine erste Kartusche (16) geleitet wird, in der mitgeführte Partikel größer 5 µm abfiltriert werden,
• danach in eine zweite Kartusche (17) geleitet wird, in der Partikel größer 1 µm abfiltriert werden,
• und danach in eine dritte Kartusche (18) geleitet wird, welche ein Bett aus Kohle-haltigem oder Aktivkohle-haltigem Absorbensmaterial enthält.

11. Verfahren nach Anspruch 10, **dadurch gekennzeichnet, dass** das Abwasser mittels einer Reinigungshaube (23) von der Fassade aufgefangen und in die erste Kammer (3) geleitet wird.

12. Verfahren nach einem der Ansprüche 10 oder 11, **dadurch gekennzeichnet, dass** wenigstens ein Teil des aus der dritten Kartusche (18) abgezogenen Klarwassers (20) als Reinigungswasser (27) in die Reinigungsvorrichtung rezykliert wird.

13. Verfahren nach einem der Ansprüche 10 bis 12, **dadurch gekennzeichnet, dass** hinter dem Auslass der dritten Kartusche (18) kontinuierlich Druck (33) und Durchflussmenge (37) gemessen werden.

14. Verfahren nach Anspruch 13, **dadurch gekennzeichnet, dass** aus den gemessenen Druckdifferenzen (34, 35, 36) und der gemessenen Durchflussmenge (37) jeweils ein Quotient gebildet wird, der für jede der Kartuschen ein Füllstandssignal erzeugt.

15. Verfahren nach Anspruch 14, **dadurch gekennzeichnet, dass** das Füllstandssignal auf eine Ampel-Farbanzeige oder durch Funk an ein Mobilgerät gegeben wird und dort den Füllstand der Kartusche anzeigt.

16. Verfahren nach einem der Ansprüche 14 oder 15, **dadurch gekennzeichnet, dass** bei Erreichen eines Höchstwertes des Füllstandssignals auf die jeweils andere redundante Kartusche, sofern vorhanden, umgeschaltet, und ansonsten die Tauchpumpe (13) abgeschaltet wird.

17. Verfahren nach Anspruch 10, **dadurch gekennzeichnet, dass** hinter dem Auslass der dritten Kartusche (18) in regelmäßigen Abständen Proben gereinigten Wassers gezogen, auf Schadstoffe analysiert und die Ergebnisse gespeichert werden.

## Claims

1. A filter device for purifying waste water from facade cleaning, comprising a filter container that is open at the top or the side, comprising:
• an inlet (2) for untreated water (1);
• a drain (19) for clarified water (20);
• a submerged pump (13) including an electrical connection;
• at least two chambers; and
• three further cartridges;
wherein
• the inlet being guided on the top side into a first chamber (3), which comprises a separation unit for coarse dirt particles on the bottom side,
• a drain into a second chamber (7) being disposed beneath the first chamber (3),
• a float-controlled submerged pump (13) being hydraulically connected to this second chamber (7) in a pot (12),
• the submerged pump (13) being connected to a first of at least three pressure-tight, closed cartridges, which are hydraulically connected to one another in series, and the last of which is connected to the drain (19) for clarified water (20),
**characterized in that**
• the first cartridge (16) comprises a sediment filter for particles greater than 5 µm,
• the second cartridge (17) comprises a sediment filter for particles greater than 1 µm, and
• the third cartridge (18) comprises a carbon or activated carbon filter.

2. The filter device according to claim 1, **characterized in that** the at least three cartridges are disposed in a third chamber (15).

3. The filter device according to claim 1 or claim 2, **characterized in that** at least one of the cartridges is designed to be redundant, in each case one of the redundant cartridges being switched in stand-by mode, and the cartridges that are designed redundantly with respect to one another comprising a switching device, which allows consumed cartridges to be switched and replaced with fresh cartridges during ongoing operation.

4. The filter device according to any one of the preceding claims, **characterized in that** the first and/or second cartridges comprise a sediment filter in the form of a wound cartridge.

5. The filter device according to any one of the preceding claims, **characterized in that** the first chamber is closed at the bottom by a nonwoven fabric (5), which rests on a mesh (6), furthermore comprises a flow breaker in the inflow region, which is designed such that the inflowing liquid is distributed as evenly as possible across the surface of the nonwoven fabric (5).

6. The filter device according to any one of the preceding claims, **characterized in that** the second chamber (7) is disposed beneath the first chamber (3) and equipped with a sedimentation pan.

7. The filter device according to any one of the preceding claims, **characterized in that** the second chamber (7) is disposed beneath the first chamber (3) and equipped with a hydrocyclone.

8. The filter device according to any one of the preceding claims, **characterized in that** the inflow of the first chamber (3), on the outside, is hydraulically connected to a purification hood, which is connected to a high pressure cleaning device (22).

9. The filter device according to any of the preceding claims, **characterized in that** a line (27) branches off downstream of the drain of the clarified water (20) and is connected to the tank for supplying liquid (25) for the high pressure cleaning device (22).

10. A method for purifying waste water (1) from facade cleaning, wherein the waste water (1)
• is conducted into a first chamber (3), in which coarse solid particles are collected by way of a mechanical prefilter,
• thereafter is conducted into a second chamber (7), in which particles having a higher specific gravity than water are separated by the action of gravity or a centrifugal force,
• thereafter is conducted into a sump (12) using a submerged pump (13),
• is conducted by the submerged pump (13) into a first cartridge (16), in which entrained particles greater than 5 µm are filtered off,
• thereafter is conducted into a second cartridge (17), in which particles greater than 1 µm are filtered off, and
• thereafter is conducted into a third cartridge (18), which includes a bed made of carbon-containing or activated carbon-containing absorbent material.

11. The method according to claim 10, **characterized in that** the waste water from the facade is collected by way of a purification hood (23) and conducted into the first chamber (3).

12. The method according to any one of claims 10 or 11, **characterized in that** at least a portion of the clarified water (20) withdrawn from the third cartridge (18) is recycled into the purification device as purification water (27).

13. The method according to any one of claims 10 to 12, **characterized in that** the pressure (33) and the flow rate (37) are measured continuously downstream of the outlet of the third cartridge (18).

14. The method according to claim 13, **characterized in that** a quotient is formed of the measured pressure differences (34, 35, 36) and the measured flow rate (37), which generates a fill level signal for each of the cartridges.

15. The method according to claim 14, **characterized in that** the fill level signal is sent to a traffic light color display or by radio to a mobile device and indicates the fill level of the cartridge there.

16. The method according to any one of claims 14 or 15, **characterized in that**, when a maximum value of the fill level signal is reached, a switch is made to the respective other redundant cartridge, if present, and otherwise the submerged pump (13) is switched off.

17. The method according to claim 10, **characterized in that** purified water is withdrawn at regular intervals downstream of the outlet of the third cartridge (18) and analyzed for harmful substances, and the results are stored.

## Revendications

1. Dispositif de filtration pour le nettoyage d'eaux usées provenant d'un nettoyage de façade avec un récipient filtrant ouvert en haut ou latéralement, présentant
• une conduite d'entrée (2) pour les eaux usées (1),
• une conduite de sortie (19) pour les eaux claires (20),
• une pompe submersible (13) dotée d'une alimentation électrique,
• au moins deux chambres,
• et trois autres cartouches,
où
• la conduite d'entrée est menée vers une première chambre (3) du côté supérieur qui présente un dispositif de séparation pour des particules de salissures grossières sur le côté inférieur,
• une conduite de sortie vers une deuxième chambre (7) est disposée en-dessous de la première chambre (3),
• une pompe submersible (13) commandée par un flotteur est reliée de manière hydraulique dans un pot (12) avec cette deuxième chambre (7),
• la pompe submersible (13) est reliée avec une première cartouche d'au moins trois cartouches fermées résistant à la pression, lesquelles sont reliées en série ensemble de manière hydraulique et la dernière d'entre elles est reliée avec la conduite de sortie (19) pour l'eau claire (20),
**caractérisé en ce que**
• la première cartouche (16) contient un filtre à sédiments pour des particules plus grandes que 5 µm,
• la deuxième cartouche (17) contient un filtre à sédiments pour des particules plus grandes que 1 µm, et
• la troisième cartouche (18) contient un filtre à charbon ou à charbon actif.

2. Dispositif de filtration selon la revendication 1, **caractérisé en ce que** les au moins trois cartouches sont disposées dans une troisième chambre (15).

3. Dispositif de filtration selon la revendication 1 ou la revendication 2, **caractérisé en ce qu'**au moins une des cartouches est conçue de manière redondante, où respectivement une des cartouches conçue de manière redondante est commutée sur stand-by, et les cartouches conçues de manière redondante les unes par rapport aux autres disposent d'un dispositif de commutation qui permet une commutation ainsi qu'un échange de cartouches utilisées par des cartouches fraîches en cours de fonctionnement.

4. Dispositif de filtration selon l'une des revendications précédentes, **caractérisé en ce que** la première, et/ou la deuxième cartouche, présente un filtre à sédiments sous la forme d'une cartouche bobinée.

5. Dispositif de filtration selon l'une des revendications précédentes, **caractérisé en ce que** la première chambre est fermée sur le côté inférieur par un non tissé (5), lequel repose sur une grille (6), présente en outre un système brisant l'écoulement dans la zone d'entrée, lequel est conçu de telle manière que le liquide entrant est distribué autant que possible de manière régulière sur la surface du non tissé (5).

6. Dispositif de filtration selon l'une des revendications précédentes, **caractérisé en ce que** la deuxième chambre (7) est disposée en-dessous de la première chambre (3) et est équipée d'une cuve de sédimentation.

7. Dispositif de filtration selon l'une des revendications précédentes, **caractérisé en ce que** la deuxième chambre (7) est disposée en-dessous de la première chambre (3) et est équipée d'un hydrocyclone.

8. Dispositif de filtration selon l'une des revendications précédentes, **caractérisé en ce que** l'entrée de la première chambre (3) est reliée de manière hydraulique avec un capot de nettoyage sur le côté extérieur, qui est relié avec un appareil de nettoyage sous haute pression (22).

9. Dispositif de filtration selon l'une des revendications précédentes, **caractérisé en ce qu'**une conduite (27) est ramifiée derrière la sortie de l'eau claire (20) et est reliée avec la réserve pour l'alimentation de liquide (25) pour l'appareil de nettoyage sous haute pression (22).

10. Procédé de nettoyage d'eaux usées (1) provenant d'un nettoyage de façades, où les eaux usées (1)
• sont emmenées dans une première chambre (3), dans laquelle des parties solides grossières sont récupérées au moyen d'un préfiltre mécanique,
• sont ensuite emmenées dans une deuxième chambre (7), dans laquelle des particules avec des densités plus élevées que l'eau sont séparées sous l'effet du poids ou de la force centrifuge,
• sont ensuite emmenées dans un bourbier (12) avec une pompe submersible (13),
• sont emmenées de la pompe submersible (13) dans la première cartouche (16), dans laquelle des particules entraînées de plus de 5 |jm sont séparées par filtration,
• sont ensuite emmenées dans une deuxième cartouche (17), dans laquelle des particules de plus de 1 µm sont séparées par filtration,
• et sont ensuite emmenées dans une troisième cartouche (18), laquelle contient un lit à base d'un matériau d'absorption contenant du charbon ou du charbon actif.

11. Procédé selon la revendication 10, **caractérisé en ce que** les eaux usées sont captées au moyen d'un capot de nettoyage (23) à partir de la façade et sont menées dans la première chambre (3).

12. Procédé selon la revendication 10 ou la revendication 11, **caractérisé en ce qu'**au moins une partie de l'eau claire (20) retirée de la troisième cartouche (18) est recyclée en tant qu'eau de nettoyage (27) dans le dispositif de nettoyage.

13. Procédé selon une des revendications 10 à 12, **caractérisé en ce que,** derrière la sortie de la troisième cartouche (18), on mesure en continu une pression (33) et une quantité d'écoulement (37).

14. Procédé selon la revendication 13, **caractérisé en ce que,** chaque fois, un quotient est formé à partir des différences de pression (34, 35, 36) et de la quantité d'écoulement (37) mesurée qui génère un signal d'état de remplissage complet pour chacune des cartouches.

15. Procédé selon la revendication 14, **caractérisé en ce que** le signal d'état de remplissage complet est donné sur un affichage par lampe de couleur ou par radio sur un appareil mobile et y indique l'état de remplissage complet de la cartouche.

16. Procédé selon la revendication 14 ou la revendication 15, **caractérisé en ce que** lorsqu'une valeur maximale du signal d'état de remplissage est atteinte, il y une commutation sur l'autre cartouche redondante respective, dans la mesure ou elle est présente, et autrement, il y a une commutation sur la pompe submersible (13).

17. Procédé selon la revendication 10, **caractérisé en ce que,** derrière la sortie de la troisième cartouche (18), des échantillons d'eau nettoyée sont prélevés à intervalles réguliers, les produits dangereux sont analysés et les résultats sont enregistrés.
